# EUROPÄISCHE PATENTSCHRIFT

(11) **EP 0 827 867 B1**
(45) Veröffentlichungstag und Bekanntmachung des Hinweises auf die Patenterteilung: **10.10.2001**
(21) Anmeldenummer: 97113086.9
(22) Anmeldetag: 30.07.1997
(51) Int. Cl.: B60R 13/02

(54) **Anbauteil, insbesondere für Innenräume von Kraftfahrzeugen**
Accessory,particularly for vehicle interiors
Accessoire, en particulier pour l'habitacle de véhicules

(30) Priorität: 22.08.1996 DE 19633947
(43) Veröffentlichungstag der Anmeldung: 11.03.1998
(73) Patentinhaber: Bayerische Motoren Werke Aktiengesellschaft, 80788 München (DE); DOW CORNING GmbH, D-65091 Wiesbaden (DE)
(72) Erfinder: Steinberg, Klaus, 85419 Mauern (DE); Markolwitz, Harald, 85283 Wolnzach (DE); Weber, Anton, 81825 München (DE); Hammer, Franz, 80339 München (DE); Clerici, Vittorio, 81249 München (DE); Müller, Martin, 65203 Wiesbaden (DE); Huber-Hesselberger, Josef, 80999 München (DE); Weindl, Johann, 83109 Grosskarolinenfeld (DE); Wimmer, Franz, 94419 Reisbach (DE); Prechtl, Gerhard, 84183 Niederviehbach (DE)

(56) Entgegenhaltungen:
- EP-A- 0 441 073
- DE-A- 3 309 776
- US-A- 5 264 270
- PATENT ABSTRACTS OF JAPAN vol. 96, no. 5, 31.Mai 1996 & JP 08 027409 A (NISSAN MOTOR), 30.Januar 1996,
- "DRY-FILM LUBRICANT FOR FRICTION AND NOISE REDUCTION" AUTOMOTIVE ENGINEERING, Bd. 104, Nr. 5, 1.Mai 1996, Seite 101 XP000591350
- PATENT ABSTRACTS OF JAPAN vol. 015, no. 362 (M-1157), 12.September 1991 & JP 03 143746 A (TOYODA GOSEI CO LTD), 19.Juni 1991,

## Beschreibung

Die Erfindung bezieht sich auf eine Vorrichtung und ein Verfahren der im Oberbegriff des 1. bzw. 10. Anspruchs angegebenen Art.

Es ist ein allgemeines Problem, daß bei bewegten (fahrenden) Kraftfahrzeugen im Innenraum Geräusche auftreten können, die daraus herrühren, daß zwei Bauteile oder Anbauteile mit gemeinsamen Berührungsflächen gegeneinander Relativbewegungen ausführen. Die Ursachen hierfür sind vielfältig und nicht immer eindeutig herleitbar.

Eine Hauptursache liegt darin, daß die Bewegungen der beiden Bauteile nicht gleitend sind, sondern mehr stotternd, auch bekannt unter der Bezeichnung Stick-Slip-Effekt.

Um hier Abhilfe zu schaffen, ist man schon dazu übergegangen, die Berührungsflächen einzelner Anbauteile mit ihrem Trägerteil oder auch gegenseitig an Stellen, die von außen nicht sichtbar sind, mit Filzstreifen, Schaumstoff-Folie oder Textilband auf Abstand zu halten. Hierdurch sollen die Geräusche, die unter dem Begriff "Knarzgeräusche" bekannt sind, eliminiert werden.

Ein Nachteil dieser Methode besteht darin, daß für diese Zusatzmaterialien Platz geschaffen sein muß, so daß z.B. eine spaltfreie Anbringung einer Türinnenverkleidung an einem Türblech nicht mehr möglich ist. Auch war bei Verwendung dieser Materialien bei einer Demontage nicht sichergestellt, daß diese Materialien nach der erneuten Montage noch voll funktionsfähig vorhanden waren.

Aufgabe der vorliegenden Erfindung ist es, hier Abhilfe zu schaffen und Möglichkeiten aufzuzeigen, wie die sogenannten Knarzgeräusche beseitigt werden können.

Diese Aufgabe wird erfindungsgemäß durch die Merkmale des 1. und 9. Anspruchs gelöst.

Diese Lösung hat den Vorteil, daß durch den Überzug, dessen Auftragsstärke nur einige Mikrometer beträgt, kein sichtbarer Spalt zwischen den aufeinanderliegenden Anbauteilen bzw. zwischen dem Anbauteil und dem Trägerteil eingehalten werden muß. Somit können diese Teile spaltlos verbaut werden. Gemäß der Erfindung ist es gleichgültig, ob der Überzug auf dem Anbauteil oder auf dem Trägerteil aufgetragen wird. Aus fertigungstechnischen Gründen wird man das Bauteil zum Überzugauftrag auswählen, das einfacher in der Handhabung ist.

Das Ausgangsmaterial des Anbauteils spielt hierbei keine Rolle, es können also z.B. Häute, Leder, Kunstleder, Lackflächen, Kunststoffoberflächen, Folien oder andere üblicherweise bei Kraftfahrzeugen verwendeten Werkstoffe mit dem Überzug versehen werden, wobei es mit den heute im Kraftfahrzeugbau üblichen Oberflächenbeschaffenheiten verwendet wird. Auf diese bekannten (An-)Bauteiloberflächen wird dann der erfindungsgemäße Überzug als weitere Beschichtung aufgetragen. Dadurch werden nicht die Relativbewegungen der Bauteile zueinander vermieden, sondern aufgrund des Überzugauftrages wird sichergestellt, daß die bisher auftretenden Geräusche bei einer Relativbewegung vermieden werden.

Aus der US-A 5,264,270 ist ein Überzugsmaterial bekannt, dessen Schmiermittelanteil in einem Bereich von 0 bis 50 Gewichts-% an der gesamten Zusammensetzung liegen kann. Der Flüssigkeitsanteil kann zwischen 5 und 95 Gewichts-% an der Gesamtzusammensetzung ausmachen. Hierbei ist jedoch nirgends klar erläutert, was unter Gesamtzusammensetzung verstanden wird. Wird Gesamtzusammensetzung verstanden incl. der Flüssigkeit, dann wird aber auch ein unsinniger Bereich von Schmiermittel zu Bindemittel erzielt. Beispielsweise kann zum einem bei einem Anteil von nahezu 0% Schmiermittel die Gesamtzusammensetzung aus nahezu 100% Bindemittel (genauer 95% Bindemittel, 5 % Flüssigkeit) bestehen. Auf der anderen Seite kann nahezu 50 % Schmiermittel und 50 % Flüssigkeit nur mit Spuren von Bindemittel gemeint sein. Weiterhin ist in der US-A 5,264270 ausgeführt, dass in dem Überzugsmaterial ein wesentlicher Anteil das Bindemittel ist. Damit kommen nur Verhältnisse von Schmiermittel zu Bindemittel im Verhältnis von 1 : 1 oder weniger in Betracht.

Dem gegenüber lehrt die vorliegende Erfindung, das Verhältnis von Festschmierstoff zu Bindemittel immer größer als 1:1, nämlich im Bereich zwischen 2 bis 25:1 (Festschmierstoff zu Bindemittel) zu wählen, um sicher die Knarzgeräusche zu vermeiden.

Die Weiterbildung nach den Ansprüchen 2 bis 6 beschreiben eine vorteilhafte Zusammensetzung des Überzugmaterials. Damit ist es möglich, einen völlig klaren (durchscheinenden) Überzug zu erhalten, so daß im folgenden das Überzugsmaterial auch als Klarlack bezeichnet wird. In diesem Fall vereinfacht sich das Auftragsverfahren, da dann der Lackoverspray mit bloßem Auge nicht sichtbar ist, falls er im Sichtbereich vorhanden ist. Darüber hinaus können damit auch Bauteile beschichtet werden, die Knarzgeräusche verursachen, aber im Sichtbereich zumindest teilweise liegen, beispielsweise eine Türinnenverkleidung, die an einer Armaturenbrettverkleidung anstößt und bei geöffneter Tür sichtbar ist.

Als Überzugsmaterial hat sich als besonders vorteilhaft eine Mischung aus einem Bindemittel mit einem Festschmierstoff und einem Lösungsmittel herausgestellt. Hierbei enthält das Überzugsmaterial bevorzugt 5 bis 10 Gewichtsanteile des Bindemittels, 20 bis 50 Gewichtsanteile des Festschmierstoffes und 35 bis 75 Gewichtsanteile des Lösungsmittels.

In einer bevorzugten Ausgestaltung können noch bis zu zwei Gewichtsanteile von Additiven, beispielsweise einem Demulgator, Bioziden und/oder Dispersions-hilfsmittel zugesetzt sein. Auch ist es möglich, daß weitere Komponenten, die allgemein bekannt sind, enthalten sind, sie sind aber nicht kritisch.

Das Bindemittel ist vorzugsweise ein Bindemittel auf Polyurethan-Basis, das vorzugsweise als Dispersion von z. B. 25 bis 50 Gewichts-% in einem Lösungsmittel, also in einer Flüssigkeit, vorzugsweise Wasser, eingesetzt wird. Die bevorzugte Menge des verwendeten Bindemittels kann 4 bis 40 Gewichtsteile, vorzugsweise 5 bis 10 Gewichtsteile betragen, wenn das Bindemittel, wie vorstehend angegeben, so eingesetzt wird, daß, wenn die die Überzugszusammensetzung hergestellt wird, das Bindemittel in Form einer Dispersion vorliegt. Polyurethan-Bindemittel-Materialien sind bekannt und im Handel erhältlich. Der Festschmierstoff ist vorzugsweise ein Schmierstoff auf der Basis von Polytetrafluorethylen-Polymeren, die auch als Dispersionen in einer Flüssigkeit vorliegen können, beispielsweise von 40 bis 75 Gewichts-%, vorzugsweise in Wasser. Die in der Überzugszusammensetzung enthaltene Flüssigkeit ist auch Umweltgründen vorzugsweise Wasser. Die Beschichtungszusammensetzungen können etwa 20 bis etwa 65 Gewichts-%, vorzugsweise etwa 40 bis 50 Gewichts-% Bindemittel und Festschmierstoff enthalten, bezogen auf das Gesamtgewicht der Zusammensetzung.

Diese Überzugszusammensetzung führt überraschenderweise zu derart guten Ergebnissen, insbesondere im Hinblick darauf, daß Überzugszusammensetzungen für andere Schmieranwendungen üblicherweise ein Gewichtsverhältnis des Schmiermittels zum Bindemittel von höchstens 1,5 : 1 aufweisen. Das bevorzugte Gewichtsverhältnis des Festschmierstoffs zu dem Bindemittel in den Beschichtungszusammensetzungen, die erfindungsgemäß eingesetzt werden, liegt im Bereich von 2 : 1 bis 25 : 1, insbesondere 5 : 1 bis 20 : 1, und ganz besonders bevorzugt bei wenigstens 10 : 1. Besonders bevorzugte Überzugszusammensetzungen weisen demgemäß 2 bis 7 Gewichtsteile Bindemittel, 30 bis 50 Gewichtsteile Festschmierstoff und 40 bis 60 Gewichtsteile Wasser auf.

Durch die Weiterbildung der Erfindung nach Anspruch 7 wird der Vorteil erreicht, daß hierdurch Montagetoleranzen berücksichtigt werden können.

Durch die Weiterbildung nach Anspruch 8 wird eine an sich bekannte Lackauftragsmethode auch zum Auftragen dieses Klarlackes empfohlen.

Im folgenden wird die Erfindung anhand eines Ausführungsbeispiels näher dargestellt. Es stellen dar:
- Figur 1: Einen schematisierten Aufbau eines Beschichtungsraumes;
- Figur 2: eine schematisierte Ansicht des Lackkreislaufes.

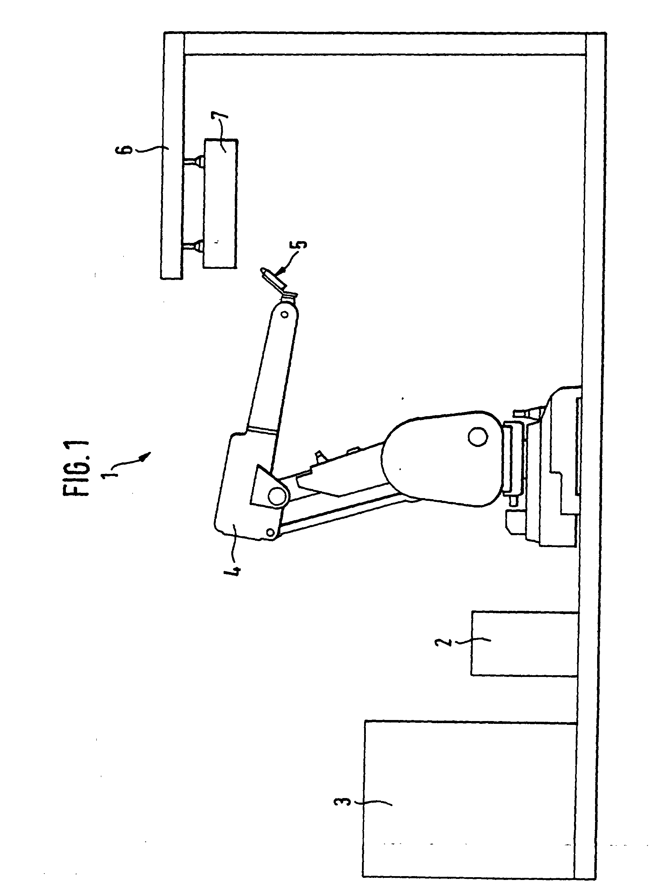

In Figur 1 ist schematisiert ein Lackauftragsraum 1 dargestellt. In ihm ist ein Lackvorratsbehälter 2, ein Dosiersystem 3 für den Lack, ein Industrieroboter 4 mit einer Auftragsdüse 5, ein Werkstückhalter 6 und ein zu beschichtendes Werkstück 7 dargestellt. Als geeigneter Lack kann beispielsweise Molykote D-96 der Firma Dow Corning verwandt werden.

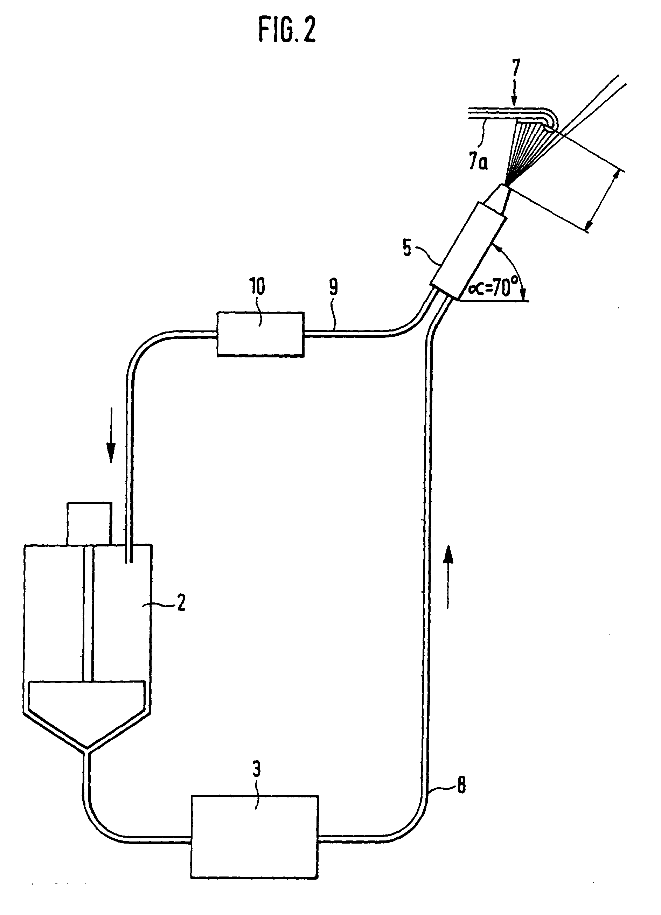

Figur 2 beschreibt den Lackkreislauf näher. Aus dem Lackvorratsbehälter 2, der mit einem Rührwerk zur optimalen Durchmischung des Lackes ausgestattet ist, wird der Lack zu einer Dosieranlage 3 zur Steuerung der Lackmengen, die aufgetragen werden, transportiert. Von dort führt die Lackvorlaufleitung 8 zur Auftragsdüse 5, die im Fall des Ausführungsbeispiels nach Figur 1 von einem Industrieroboter 4 gehalten wird.

Von der Auftragsdüse 5 verläuft eine Lackrücklaufleitung 9 über ein Rücklaufventil 10 zu dem Lackvorratsbehälter 2.

Beschichtet wird in Figur 2 ein nur schematisch angedeutetes Werkstück 7, das derart angeordnet ist, daß es von seiner Montageseite 7 a her mit einem Antiknarz-Lack beschichtet werden kann. Hierbei wird das zu beschichtende Werkstück so positioniert, daß der Lack nur auf der Montageseite aufgebracht werden kann und nicht in den sichtbaren Bereich gelangt. Notfalls wird hierzu eine Abdeckung der Übergangsstelle vom Montagebereich zum sichtbaren Bereich vorgenommen.

Es hat sich herausgestellt, daß ein Abstand der Auftragsdüse 5 von 30 mm von der Lackauftragsfläche bei einer Neigung von 70° zur Horizontalen optimale Ergebnisse liefert.

Auf diese Art kann materialverbrauchsarm in einer Großserienfertigung der Anti-knarzlack aufgebracht werden. Weitere Vorteile des Lackes liegen darin, daß er nahezu gewichtsneutral ist, seine Lebensdauer der des Fahrzeugs entspricht und designunabhängig verwendet werden kann. Auch durch eine spätere Demontage und anschließende Montage der beschichteten Teile wird seine Haltbarkeit nicht beeinflußt. Dies ist besonders wichtig für Innenanbauteile bei Kraftfahrzeugen, die im Laufe der Lebensdauer der Fahrzeuge eventuell demontiert werden müssen.

Das nachstehende Beispiel dient der weiteren Erläuterung der Erfindung.

### Beispiel

Es wurde eine Beschichtungszusammensetzung hergestellt, indem 10 Gewichtsteile einer Dispersion eines Polyurethan-Bindemittels mit etwa 30 Gewichts-% Polyurethan-Feststoffgehalt, 70 Gewichtsteile einer 60 gewichts-%igen PTFE-Dispersion in Wasser und 20 Gewichtsteile destilliertes Wasser gemischt wurden. Eine Vergleichszusammensetzung wurde hergestellt, indem die gleichen Bestandteile wie bei der vorstehend beschriebenen Zusammensetzung verwendet wurden, jedoch lediglich 7,5 Gewichtsteile PTFE-Dispersion und 82 Gewichtsteile Wasser. Das Schmierstoff/Bindemittel-Feststoffverhältnis des Beispiels beträgt 13,125/1 während es nach dem Vergleichsbeispiel 1,4/1 beträgt. Beide Zusammensetzungen wurden durch Sprühren auf eine Kraftfahrzeugtür aufgebracht, um einen Film mit einer Dicke von 15 bis 20 µm zu bilden. Die Reibungswerte wurden dann mit einem Polytester®-Gerät bestimmt, und zwar mit einer Gleitgeschwindigkeit von 1cm/s und einem POM-Kugellager mit einer Last von 50 bis 550 g.

Die Reibungswerte in µ sind in der nachstehenden Tabelle angegeben.

| **Last (g)** | **Beispiel** | **Vergleichsbeispiel** |
|---|---|---|
| 50 | 0.080 | 0.104 |
| 100 | 0.062 | 0.120 |
| 150 | 0.059 | 0.114 |
| 200 | 0.062 | 0.122 |
| 250 | 0.061 | 0.127 |
| 300 | 0063 | 0.134 |
| 350 | 0.067 | 0.140 |
| 400 | 0.070 | 0.146 |
| 450 | 0.073 | 0.150 |
| 500 | 0.077 | 0.156 |
| 550 | 0.081 | 0.158 |

Die Versuchsergebnisse zeigen klar, daß die Zusammensetzung nach dem erfindungsgemäßen Beispiel zu einem wesentlich besseren (niedrigeren) Reibungskoeffizienten führt, selbst bei hoher Last. Die Wirkung der Geräschherabsetzung ist derart, daß eine niedrigere Reibung den Slip-Stick-Effekt verringert.

## Patentansprüche

1. Anbauteil, insbesondere Innenverkleidungsteil im Innenraum von Kraftfahrzeugen, das Berührungsflächen zu mindestens einem anderen An- bzw. Bauteil besitzt und bei dem an den Berührungsflächen Relativbewegungen auftreten, wobei die Berührungsfläche eines der beteiligten An- bzw. Bauteile mit einem nahezu abriebfreien, reibungsarmen Überzug beschichtet ist, der einen Festschmierstoff und ein Bindemittel enthält,
**dadurch gekennzeichnet, daß** das Gewichtsverhältnis des Festschmierstoffs zu dem Bindemittel 2 bis 25 Gewichtsteile Festschmierstoff zu 1 Gewichtsteil Bindemittel beträgt.

2. Anbauteil nach Anspruch 1,
**dadurch gekennzeichnet, daß** der Überzug durch Aufbringen einer Beschichtungszusammensetzung aus 2 bis 10 Gewichtsteilen Bindemittel, 20 bis 50 Gewichtsteilen Festschmierstoff und 35 bis 75 Gewichtsteilen einer Flüssigkeit gebildet wird.

3. Anbauteil nach einem der vorangegangenen Ansprüche,
**dadurch gekennzeichnet, daß** das Bindemittel ein Bindemittel auf Polyurethan-Basis ist.

4. Anbauteil nach einem der vorangegangenen Ansprüche,
**dadurch gekennzeichnet, daß** der Festschmierstoff ein Festschmierstoff auf Polytetraflourethylen-Basis ist.

5. Anbauteil nach Anspruch 2,
**dadurch gekennzeichnet, daß** die Flüssigkeit Wasser ist.

6. Anbauteil nach einem der vorangegangenen Ansprüche,
**dadurch gekennzeichnet, daß** in dem Überzug weiterhin Additive enthalten sind.

7. Anbauteil nach einem der vorangegangenen Ansprüche,
**dadurch gekennzeichnet, daß** das die Größe der Auftragsfläche des Überzuges die Größe der Berührungsfläche des (An-)Bauteils mit dem anderen (An-)Bauteil geringfügig überschreitet.

8. Anbauteil nach einem der vorangegangenen Ansprüche,
**dadurch gekennzeichnet, daß** der Überzug mit Hilfe eines Industrieroboters und einer Auftragsdüse aufgetragen wird.

9. Verfahren zum Reduzieren des Geräusches, das an den Berührungsflächen zweier miteinander in Kontakt stehender und gegeneinander bewegbarer (An-)Bauteile entsteht,
**dadurch gekennzeichnet, daß** einer der beiden (An-)Bauteile mit einem Überzug versehen wird, indem eine Beschichtungszusammensetzung aus 2 bis 10 Gewichtsteilen eines Bindemittels auf Polyurethan-Basis, 20 bis 50 Gewichtsteile eines Festschmierstoffes auf Polytetraflourethylen-Basis und 35 bis 75 Gewichtsteile einer Flüssigkeit auf das (An-)Bauteil aufgebracht wird.

## Claims

1. A mounted part, especially an inner lining part in the interior of motor vehicles and having surfaces in contact with at least one other component or mounted part and wherein relative movements occur at the surfaces in contact, the contact surface of one of the said components or mounted parts being covered with a substantially wear-resistant, low-friction coating containing a solid lubricant and a binder,
**characterised in that** the ratio by weight of the solid lubricant to the binder is 2 to 25 parts of solid lubricant per 1 part of binder.

2. A mounted part according to claim 1,
**characterised in that** the coating is formed by applying a composition comprising 2 to 10 parts by weight of binder, 20 to 50 parts by weight of solid lubricant and 35 to 75 parts by weight of a liquid.

3. A mounted part according to any of the preceding claims,
**characterised in that** the binder is polyurethane-based.

4. A mounted part according to any of the preceding claims,
**characterised in that** the solid lubricant is polytetrafluoroethylene-based.

5. A mounted part according to claim 2,
**characterised in that** the liquid is water.

6. A mounted part according to any of the preceding claims,
**characterised in that** other additives are present in the coating.

7. A mounted part according to any of the preceding claims,
**characterised in that** the area of the surface over which the coating is applied slightly exceeds the area of the surface of the component or mounted part in contact with the surface of the other component or mounted part.

8. A mounted part according to any of the preceding claims,
**characterised in that** the coating is applied by an industrial robot via a nozzle.

9. A method of reducing the noise occurring at the surfaces in contact between two components or mounted parts in contact with and movable relative to one another,
**characterised in that** one of the two components or mounted parts is given a coating by applying a composition comprising 2 to 10 parts by weight of a polyurethane-based binder, 20 to 50 parts by weight of a polytetrafluoroethylene-based solid lubricant and 35 to 75 parts by weight of a liquid to the said component or mounted part.

## Revendications

1. Accessoire, en particulier partie de revêtement interne dans l'habitacle d'un véhicule automobile, qui présente, avec au moins un autre accessoire ou composant des portées de contact le long desquelles ont lieu des mouvements relatifs, la portée de contact d'un des accessoires ou composants participants étant revêtue d'un enduit à faible coefficient de frottement et résistant à l'abrasion, contenant un lubrifiant solide et un liant,
**caractérisé en ce que**
le rapport pondéral du lubrifiant solide au liant est de 2 à 25 parties de lubrifiant à 1 partie de liant.

2. Accessoire selon la revendication 1,
**caractérisé en ce que**
l'enduit est réalisé en déposant un revêtement dont la composition pondérale est de 2 à 10 parties de liant, 20 à 50 parties de lubrifiant solide et 35 à 75 parties d'un liquide.

3. Accessoire selon l'une quelconque des revendications précédentes,
**caractérisé en ce que**
le liant est à base de polyuréthane.

4. Accessoire selon l'une quelconque des revendications précédentes,
**caractérisé en ce que**
le lubrifiant solide est à base de polytétrafluoréthylène.

5. Accessoire selon la revendication 2,
**caractérisé en ce que**
le liquide est de l'eau.

6. Accessoire selon l'une quelconque des revendications précédentes,
**caractérisé en ce que**
l'enduit contient d'autres additifs.

7. Accessoire selon l'une quelconque des revendications précédentes,
**caractérisé en ce que**
les dimensions de la surface de dépôt de l'enduit sont un peu supérieures à celles de la portée de contact de l'accessoire ou du composant avec l'autre accessoire ou composant.

8. Accessoire selon l'une quelconque des revendications précédentes,
**caractérisé en ce que**
l'enduit est déposé au moyen d'un robot industriel et d'une buse de projection.

9. Procédé pour réduire le bruit qui se produit le long des portées de contact de deux accessoires ou composants en contact avec possibilité de mouvement relatif,
**caractérisé en ce qu'**
un des deux accessoires ou composants porte un enduit, dont la composition pondérale est de 2 à 10 parties d'un liant à base de polyuréthanne, 20 à 50 parties d'un lubrifiant solide à base de polytétrafluoréthylène, et de 35 à 75 parties d'un liquide.
